# FASCICULE DE BREVET EUROPEEN

(11) **EP 0 256 941 B1**
(45) Date de publication et mention de la délivrance du brevet: **19.04.1995**
(21) Numéro de dépôt: 87401849.2
(22) Date de dépôt: 07.08.1987
(51) Int. Cl.: B60K 17/36, B60G 5/04, B62D 7/14, B62D 21/02, B60K 17/344

(54) **Véhicule automobile à roues, du type tout-terrain à transmission intégrale**
Geländefahrzeug mit Rädern mit integriertem Getriebe
Cross-country wheeled vehicle with integral transmission

(30) Priorité: 08.08.1986 FR 8611509
(43) Date de publication de la demande: 24.02.1988
(73) Titulaire: Legueu, Paul, F-44380 Pornichet (FR)
(72) Inventeur: Legueu, Paul, F-44380 Pornichet (FR)
(74) Mandataire: Rodhain, Claude

(56) Documents cités:
- GB-A- 306 733
- US-A- 2 395 108
- US-A- 2 843 395
- US-A- 3 191 708
- US-A- 3 948 334
- Kraftfahrzeuge und Panzer der Reichswehr, Wehrmacht und Bundeswehr, 12.Auflage, Werner Oswald, Motorbuchverlag, Stuttgart, 1982

## Description

L'invention concerne un véhicule automobile à roues, du type tout-terrain à transmission intégrale, c'est-à-dire dont toutes les roues sont adaptées à être motrices, notamment un véhicule lourd susceptible de convenir à des applications civiles et militaires.

On connaît déjà, par exemple par le brevet aux Etats-Unis d'Amérique No. 2 395 108, des véhicules de ce type, mais il s'agit en général de véhicules relativement légers (de poids inférieur à une dizaine de tonnes) et comportant en conséquence seulement deux ou trois essieux, c'est-à-dire quatre ou six roues. Toute augmentation de poids envisagée nécessite la présence d'un essieu supplémentaire, et l'on est ainsi naturellement amené à la conception d'un camion articulé (semi-remorque) dont toutes les roues ne sont pas motrices. Cependant, cette solution n'est pas toujours optimale par suite des conditions particullères de conduite de ce type de véhicules, et du fait que si le quatrième essieu s'impose à cause du poids en charge du véhicule et du surdimensionnement nécessité par l'utilisation tout terrain, sa présence n'est pas forcément justifiée par la longueur prévue pour le véhicule, laquelle doit de préférence être la plus faible possible pour une utilisation aisée en tout terrain et permettre au véhicule de s'inscrire aisément dans les courbes des routes, sans toutefois que la faible longueur soit compensée par une grande hauteur, afin de conserver un centre de gravité relativement bas et également pour que le véhicule ne soit pas obligatoirement à classer "convoi exceptionnel".

On connaît également, comme cela est exposé dans l'ouvrage "Kraftfahrzeuge und Panzer der Reichswehr, Wehrmacht und Bundeswehr", de Monsieur Werner OSWALD, un véhicule comportant une cabine et un plateau sans articulation de l'un part rapport à l'autre autour d'un axe vertical, portés par deux longerons supportés à l'avant et à l'arrière du véhicule par deux trains de roues motrices respectifs comportant chacun deux roues avant motrices respectivement de part et d'autre d'un pont avant et deux roues arrière motrices de part et d'autre d'un pont arrière ; les roues du train avant sont également directrices et les ponts du train avant sont espacés de la même distance que ceux du train arrière ; il s'agit cependant là d'un véhicule très lourd (plus de vingt tonnes à vide) et volumineux, dont la hauteur totale à vide, c'est-à-dire au niveau de la cabine, est supérieure à 3,2 mètres, et dont la longueur est de l'ordre de neuf mètres, véhicule qui, à part le fait qu'il n'est pas articulé, présente bon nombre des inconvénients mentionnés plus haut.

L'invention a donc pour but de créer un véhicule automobile à roues du type tout terrain susceptible d'admettre un poids en charge supérieur à une dizaine de tonnes, le choix d'un véhicule à roues plutôt qu'à chenilles étant dû à la nécessité d'une utilisation mixte du véhicule, celui-ci pouvant être amené à emprunter l'infrastructure routière classique. A cet effet, le véhicule doit rester maniable donc compact, tout en présentant une grande robustesse et une grande fiabilité sans pour autant impliquer des coûts de fabrication, d'utilisation, de maintenance et de dépannage importants ; une standardisation poussée des éléments est donc également recherchée.

A cet égard, on connaît de plus par le brevet US-A-2 843 395, des trains de roues du type bogies comportant deux ponts sensiblement identiques, reliés par un arbre de transmission inter-ponts ; les roues du pont avant et celles du pont arrière sont montées mobiles en pivotement autour d'un axe transversal fixe par rapport aux longerons, situé sensiblement à égale distance entre les roues avant et arrière du train, et contenu dans un plan transversal au véhicule constituant un plan de symétrie du train pour les deux ponts et la suspension ; la disposition d'un tel train est avantageuse, mais il s'agit là d'un train moteur pour lequel des moyens de commande de direction susceptibles de convenir aux buts assignés à l'invention, restent à imaginer.

Ainsi, l'invention concerne un véhicule automobile comportant une cabine et un plateau sans articulation l'un par rapport à l'autre autour d'un axe vertical, portés par deux longerons supportés à l'avant et à l'arrière du véhicule par deux trains de roues motrices respectifs comportant chacun au moins deux roues avant motrices respectivement de part et d'autre d'un pont avant et au moins deux roues arrière motrices respectivement de part et d'autre d'un pont arrière, les roues motrices du train avant étant également directices et les ponts du train avant étant espacés de la même distance que ceux du train arrière, véhicule caractérisé en ce que les ponts d'un même train sont identiques et ceux du train avant sont identiques à ceux du train arrière à cette différence près que ceux du train avant comportent des joints homocinétiques, les ponts dans chaque train sont reliés par un arbre de transmission inter-ponts, et, dans chacun des deux trains, les roues du pont avant et celles du pont arrière sont montées mobiles en pivotement autour d'un axe de pivotement respectif transversal fixe par rapport aux longerons et situé sensiblement à égale distance entre les roues avant et les roues arrière du train de roues correspondant et contenu dans un plan transversal au véhicule constituant un plan de symétrie du train considéré pour les deux ponts et la suspension ordonnés de part et d'autre de ce plan, et en ce qu'il comporte un dispositif de direction muni d'un boîtier de direction auquel est solidarisé un levier de direction auquel est articulée une extrémité d'une bielle de commande sensiblement horizontale dont l'extrémité opposée est fixée à un tiroir hydraulique commandant un vérin hydraulique d'assistance dont une partie est en appui contre un point fixe et dont une autre partie est mobile par rapport à la première et solidarisée à un levier relais dont une extrémité est articulée à un point fixe et dont deux autres zones comportent des articulations respectives avec une bielle de commande de timonerie du pont avant et une bielle de commande de timonerie du pont arrière du train avant, le point fixe du levier relais étant dans le plan transversal vertical du véhicule qui est situé à égale distance entre les roues avant et les roues arrière du train de roues avant, les deux bielles de commande de timonerie s'articulant à un levier de fusée respectif solidaire d'une roue du train avant à la verticale de la droite joignant les axes des pivots des roues solidarisées au même pont.

D'autres caractéristiques et avantages de l'invention ressortiront de la description qui va suivre se rapportant à une forme de réalisation donnée à titre d'exemple non limitatif et représentée sur les dessins ci-joints dans lesquels :
- la figure 1 est une vue de côté d'un véhicule selon l'invention ;

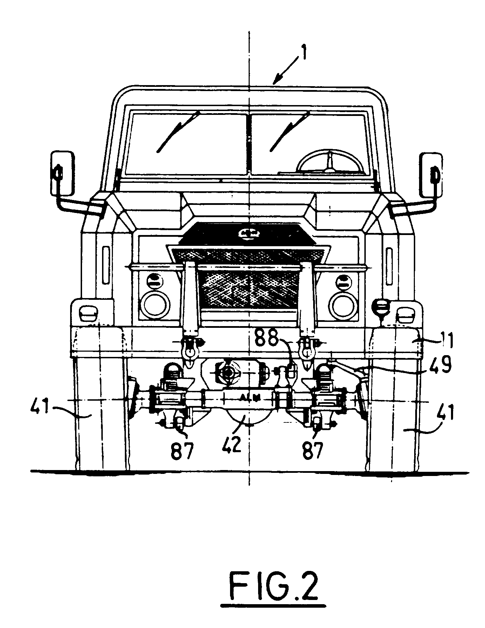

- la figure 2 est une vue de face de ce véhicule,
- la figure 3 est une vue de dessus du véhicule,
- la figure 4 est une vue de dessus montrant la géométrie du braquage des roues,
- les figures 5A et 5B sont des vues respectivement de côté et de dessus montrant en correspondance les pièces principales du mécanisme de direction et la façon dont elles coopèrent avec les roues,
- la figure 6 est une vue de côté du mécanisme de direction et des principaux organes de suspension des roues du train avant,
- la figure 7 est une vue de face partiellement coupée d'une partie des organes représentés sur la figure 6,
- la figure 8 est une vue de face partiellement coupée d'autres organes représentés sur la figure 6.

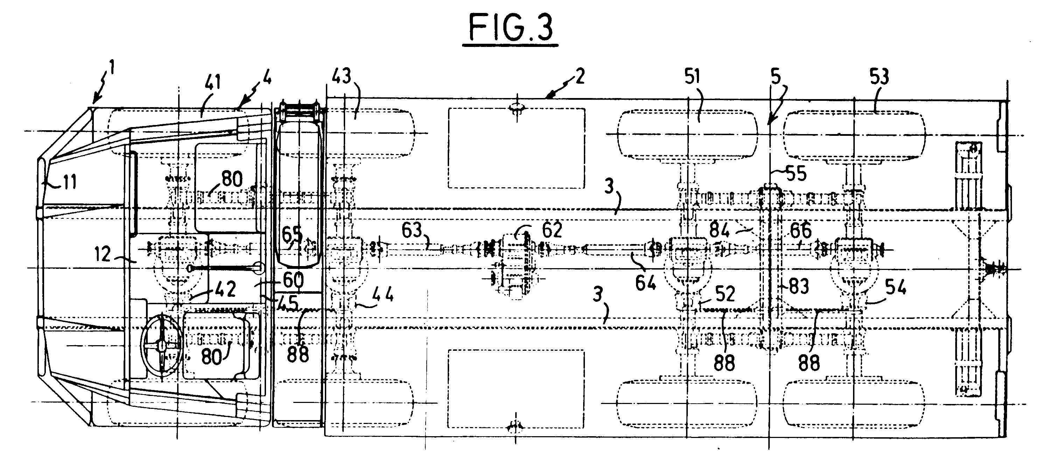

Le véhicule automobile représenté sur les figures est un camion à huit roues motrices dont quatre sont directrices, du type plateau, c'est-à-dire qu'il comporte une cabine 1 et un plateau 2 sans articulation l'un par rapport à l'autre autour d'un axe vertical comme c'est le cas pour les semi-remorques. La cabine 1 et le plateau 2 sont portés par deux longerons 3 supportés à l'avant et à l'arrière du véhicule par deux trains 4,5 de roues motrices respectifs comportant chacun (au moins) deux roues avant 41,51 motrices respectivement de part et d'autre d'un pont avant 42,52 et (au moins) deux roues arrière 43, 53 motrices respectivement de part et d'autre d'un pont arrière 44,54 identique au pont avant; les roues motrices 41,43 du train avant 4 sont également directrices et les ponts 42,44 du train avant sont espacés de la même distance que ceux 52,54 du train arrière et identiques à ceux-ci mais munis en plus de joints homocinétiques; les roues de chacun des deux trains 4,5 sont montées mobiles en pivotement autour d'un axe 45,55 d'un pivot respectif transversal au véhicule situé sensiblement à égale distance entre les roues avant et les roues arrière du train de roues correspondant (représenté sur toute sa longueur,sur la figure 3,seulement pour le train arrière, afin d'alléger le dessin).

Afin que le camion puisse progresser sur des terrains présentant des changements de pente importants, la tangente aux roues avant 41 du véhicule passant par la base du pare-chocs avant 11 fait avec le plan défini par la base des roues un angle de 46 degrés, obtenu grace au fait que le moteur 12 est dans une position très reculée, seulement légèrement en porte à faux en avant du pont avant 42; en revanche,pour que la charge utile soit bien répartie sur les deux trains de quatre roues, la cabine de pilotage 1 est "avancée" sur le moteur, et l'arrière du moteur est partiellement entre les deux sièges de la cabine, de sorte que les portes de la cabine sont au-dessus des roues avant 41; dans le même ordre d'idées, la tangente aux roues arrière 53 du véhicule passant par la base de l'arrière du véhicule fait avec le plan défini par la base des roues, un angle de 38 degrés.

Pour des dimensions hors tout de environ 7,20 m (longueur) x 2,25m (largeur) x 2,60 m (hauteur) et un poids à vide de 7000 kg environ , on obtient une répartition des charges de environ 3,5 tonnes par train de roues, s'appliquant respectivement à mi-distance entre les roues du train avant, soit à 1,70 m de l'avant du véhicule et à mi-distance entre les roues du train arrière, soit à 1,75 m environ de l'arrière (équivalent à un empattement de 3,75m), le centre de gravité étant environ à 1,85 m de l'axe du train avant et à 1,90 m de celui du train arrière; en charge (avec 7000 kg de charge utile), le centre de gravité passe à environ 2,35 m du train avant et 1,4 m du train arrière définis comme ci-dessus, avec 5200 kg sur le train avant et 8800 kg sur le train arrière.

La charge utile est disposée sur le châssis, surbaissé, à environ 1,20 m du sol, et la longueur disponible pour la charge utile est de 5,00 mètres grâce à l'avancement de la cabine sur le moteur; un espace de 0,40 m est même prévu entre la paroi arrière de la cabine et l'emplacement de la charge utile, pour le rangement de différents accessoires tels qu'une roue de secours , une échelle pour l'accès au plateau, etc.

Ce véhicule a,comme on l'a vu, huit roues motrices, présentant à l'arrière comme à l'avant une structure symétrique avec une voie de 1,90 m environ et un écartement des axes des roues avant et arrière d'un même train de environ 1,20 m,et quatre de ces roues sont directrices, à savoir les quatre roues 41,43 du train avant 4.

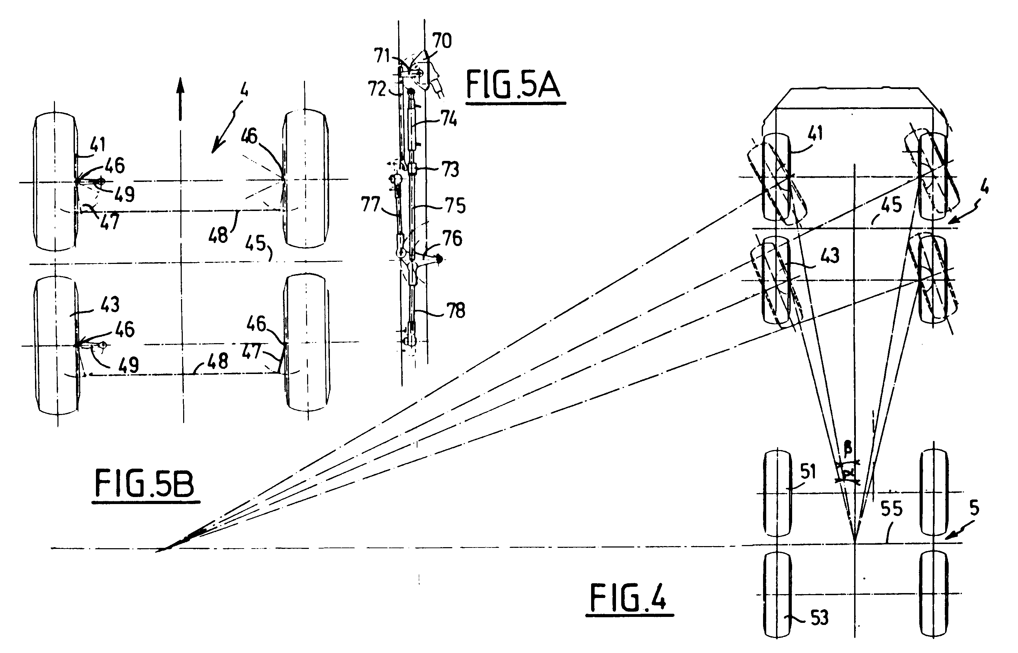

La maniabilité du véhicule en tout terrain et sur route dans les courbes,est due en partie à son faible rayon de braquage (environ 10,75 m hors tout), obtenu grace à la géométrie et au dimensionnement étudiés des trains avant et arrière. L'écartement des axes des pivots 46 (figure 5B) des roues des ponts du train avant (sensiblement au droit du flanc interne des pneumatiques est d'environ 1,60 m,et l'écartement des roues du train arrière est identique; l'angle α déterminé par l'axe longitudinal du véhicule et la droite qui joint l'intersection de cet axe longitudinal avec l'axe transversal du train arrière situé à mi-distance de ses roues avant et arrière au pivot de chaque roue arrière 43 du train avant est de 14°21', tandis que l'angle β déterminé par l'axe longitudinal et la droite qui joint l'intersection de ces axes longitudinal et transversal au pivot de chaque roue avant 41 du train avant est de 10°27'. De plus, en ce qui concerne les roues avant 41 du train avant, lors d'un braquage de la direction, la roue interne effectue un pivotement maximal de 30 degrés tandis que la roue externe effectue un pivotement maximal de 25°28', alors qu'en ce qui concerne les roues arrière 43 de ce train avant, les valeurs correspondantes sont respectivement de 22°34' et de 18°56'. L'angle entre l'axe longitudinal du véhicule et la droite qui joint le pivot de la roue à l'articulation du bras de direction 47 et de la barre d'accouplement 48 des leviers des deux roues du même pont (schématisés sur la figure 5B) est de 10°27' pour les roues avant du train avant et de 14°21' pour les roues arrière et est donc égal à l'angle entre l'axe longitudinal du véhicule et la droite qui joint le pivot de la roue concernée à l'intersection de l'axe longitudinal et de l'axe transversal qui a déjà été défini plus haut.

Les valeurs choisies permettent (mais ce ne sont pas les seules possibles) que, lors d'un braquage,les projections verticales (sur un plan horizontal) respectives des prolongements des axes centraux de rotation de chaque roue directrice se coupent en un même point, situé sur la projection verticale sur un plan horizontal du prolongement de l'axe de pivotement 55 du train arrière situé à égale distance des roues avant et arrière de ce train arrière.

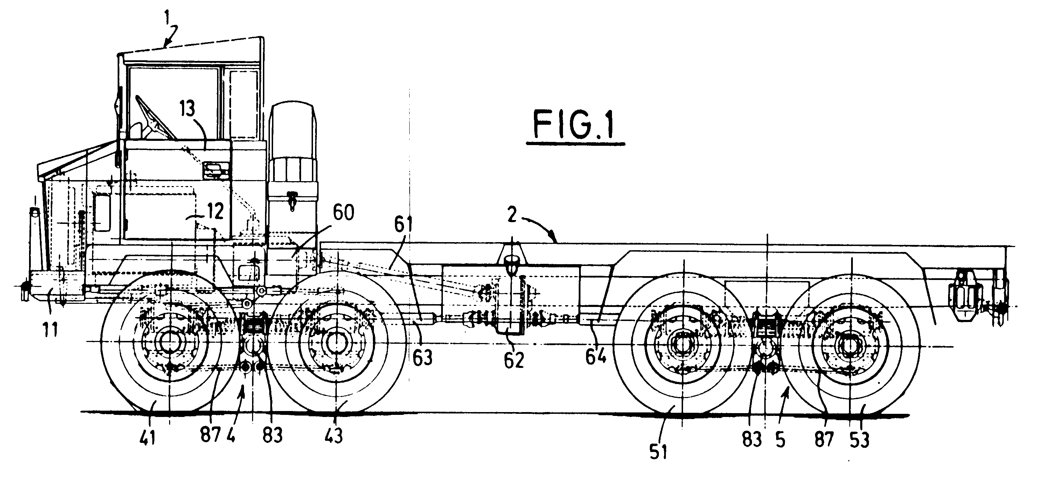

La transmission du mouvement du moteur 12 (6 cylindres délivrant 165 chevaux à 2900 t/mn) aux roues est effectuée par l'intermédiaire d'un embrayage dit du type 14'' et de la boite de vitesses 60 (5AV + 1 AR) en bout d'arbre moteur, reliée par un arbre de transmission 61 à une boîte de transfert 62 à différentiel répartiteur de couple entre le train avant et le train arrière, à deux vitesses (rapports 1 et 1/2) (figure 1). De la boîte de transfert 62, partent deux arbres de transmission du mouvement 63,64 respectivement au point arrière 44 du train avant et au point avant 52 du train arrière; deux autres arbres de transmission inter-ponts 65,66 partent respectivement du pont arrière 44 du train avant pour transmettre le mouvement au pont avant 42, et du pont avant 52 du train arrière pour le transmettre au pont arrière 54.

Les ponts du train avant et ceux du train arrière sont identiques, à cette différence près que les ponts (42,44) du train avant comportent des joints homocinétiques connu sous le nom de joints RZEPPA de 6''; deux ponts d'un même train sont également identiques; les quatre ponts comportent un différentiel et sont au rapport de 1/6,66 à double démultiplication.

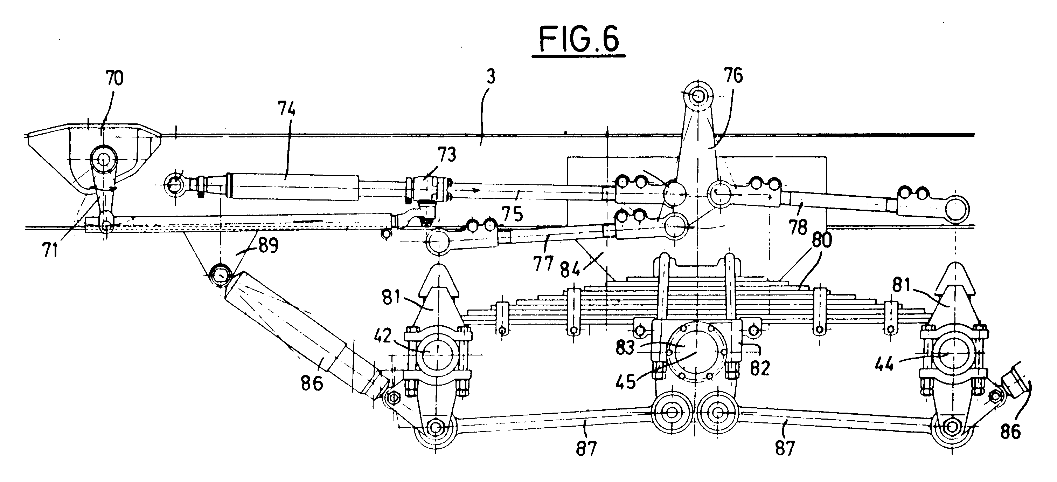

La commande des roues directrices est assistée et effectuée à partir du volant et de la colonne de direction,solidarisée à un boîtier de direction 70 à circulation de billes (figure 5A et 6) d'où part, vers le bas,un levier de direction aval 71 articulé selon un axe horizontal à une extrémité d'une bielle de commande 72 en deux parties vissées l'une dans l'autre de manière à être de longueur réglable et disposée horizontalement; l'extrémité opposée de la bielle de commande est fixée à un tiroir hydraulique 73 commandant un vérin hydraulique 74 d'assistance dont une extrémité du corps est solidarisée en appui contre un point fixe et dont l'extrémité libre de la tige porte une bielle 75 en deux parties elle-même solidarisée par l'intermédiaire d'une rotule à un levier relais 76 dont une extrémité est articulée à un point fixe et dont deux autres zones comportent des articulations respectives avec une bielle de commande 77 de timonerie du pont avant et avec une bielle de commande 78 de timonerie du pont arrière, du train avant; ces deux bielles de commande 77,78 sont en trois parties vissées l'une dans l'autre de manière à être de longueur réglable. Le point fixe pour le vérin hydraulique 74 est situé en avant du pont avant, légèrement en arrière du boîtier de direction 70, tandis que le point fixe du levier relais 76 est dans le plan transversal vertical du véhicule qui est situé entre les deux ponts 42,44 du train avant 4 à mi-distance de ceux-ci (c'est-à-dire à mi-distance des axes 46 des pivots avant et arrière des roues directrices); les deux bielles de commande 77,78 respectivement de la timonerie du pont avant 42 et de la timonerie du pont arrière 44 s'articulent au levier de fusée 49 de la timonerie correspondante à la verticale de la droite joignant les axes des pivots des roues du pont concerné.

L'aptitude du véhicule à une circulation tout terrain tient également en grande partie à la conception de sa suspension, laquelle est sensiblement identique pour le train avant et le train arrière. Cette suspension est ordonnée autour du plan transversal vertical mentionné précédemment, pour le train avant, et autour du plan transversal vertical situé entre les deux ponts du train arrière à mi-distance de ceux-ci, pour le train arrière, lequel constitue un plan de symétrie pour le pont considéré, et les trains avant 4 et arrière 5 étant eux-mêmes pratiquement symétriques par rapport à un plan vertical transversal par rapport au véhicule.

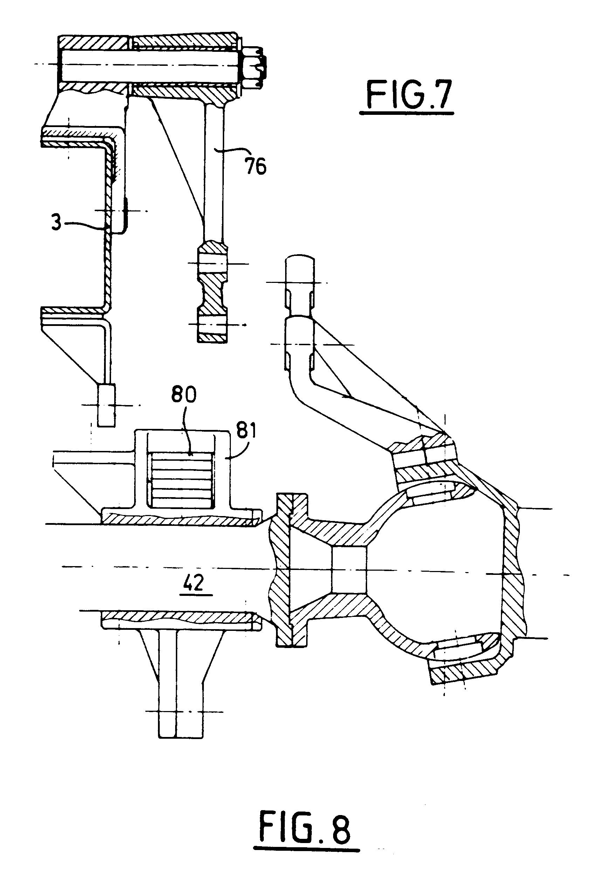

Ainsi, si l'on considère le train avant, de chaque côté (droit et gauche), la suspension (figures 6,8) comporte un empilage 80 de lames de ressorts allongées longitudinalement par rapport au véhicule dont la longueur va en décroissant du bas vers le haut et disposées "inversées" et libres de glisser légèrement les unes contre les autres; la lame inférieure de cet empilage est solidarisée à chacune de ses deux extrémités à un dispositif de bridage respectif 81 entourant le pont avant 42 pour l'un et le pont arrière 44 pour l'autre, et la solidarisation de la lame inférieure au dispositif de bridage 81 se situe au dessus du point,à la verticale de l'axe longitudinal de celui-ci; les lames sont elles-même bridées dans leur région centrale, au moyen d'arceaux portés à la partie supérieure d'un dispositif de bridage 82 d'un pivot 83 placé en dessous de l'empilage 80 et dont l'axe longitudinal 45 est horizontal et dans le plan transversal de symétrie du train avant en dessous du niveau des axes de rotation des roues. Ce pivot 83 s'étend d'un seul tenant de l'empilage 80 de lames de droite à celui de gauche et est supporté par des paliers 84 fixés contre la face interne des longerons et s'étendant en dessous de ces derniers. Une telle suspension à lames est prévue aussi bien pour le train arrière que pour le train avant.

Cette suspension est complétée, de manière originale, par un système comportant des amortisseurs hydrauliques télescopiques 86 pour le train avant seulement,et, pour le train arrière comme pour le train avant, des bielles de réaction 87,88. Ainsi, pour le train avant seulement et de chaque côté, deux amortisseurs hydrauliques télescopiques 86 formant tirants de suspension et montés sur "silentbloc" s'étendent selon un plan longitudinal par rapport au véhicule (le même plan pour le train avant et le train arrière),et sont montés à pivotement et inclinés entre d'une part, à une extrémité, le dispositif du bridage 81 du pont avant 42 pour l'un et celui du pont arrière 44 pour l'autre, et d'autre part, à l'autre extrémité, un support 89 fixé sous le chassis à l'avant du dispositif de bridage 81 correspondant pour le premier amortisseur et un support fixé sous le chassis à l'arrière de l'autre dispositif de bridage 81 pour le second amortisseur; la solidarisation des amortisseurs 86 aux dispositifs de bridage 81 est effectuée à la partie inférieure de ces derniers; à chaque amortisseur hydraulique 86, correspond une bielle de réaction 87 s'étendant également dans un plan longitudinal par rapport au véhicule (le même pour toutes les bielles de réaction); chaque bielle de réaction 87 est montée à pivotement entre la partie inférieure du dispositif de bridage 81 du pont auquel est fixé l'amortisseur 86 correspondant et la partie inférieure du dispositif de bridage 82 du pivot 83 placé en dessous de l'empilage 80 de lames de suspension, en conséquence en dessous du pivot 83; les bielles de réaction 87 sont normalement légèrement inclinées, leur extrémité solidarisée au dispositif de bridage 82 du pivot étant légèrement au-dessus de l'extrémité opposée. Le train arrière, comme on l'a vu, ne comporte pas d'amortisseurs télescopiques 86, mais possède en revanche des bielles de réaction 87 montées également exactement de la manière qui vient d'être décrite.

Sur le train avant comme sur le train arrière, deux autres bielles de réaction 88 (figure 3) sont prévues (donc quatre au total), mais seulement du côté gauche,entre l'amortisseur à lames 80 et l'axe longitudinal du véhicule. Les bielles 88 s'étendent sensiblement parallèlement aux longerons 3, entre le dispositif de bridage 82 du pivot dont l'axe longitudinal 45,55 s'étend dans le plan transversal de symétrie du train 4,5 considéré, et respectivement un dispositif de bridage entourant le pont avant et un dispositif de bridage entourant le pont arrière; les bielles de réaction 88 s'étendent au-dessus du niveau des axes de rotation des roues.

Ainsi, les roues d'un même train non seulement possèdent une certaine possibilité de débattement en hauteur entre côté droit et côté gauche, mais encore peuvent pivoter autour de l'axe s'étendant horizontalement dans un plan vertical à mi-distance des ponts du train concerné.

## Revendications

1. Véhicule automobile comportant une cabine (1) et un plateau (2) sans articulation l'un par rapport à l'autre autour d'un axe vertical, portés par deux longerons (3) supportés à l'avant et à l'arrière du véhicule par deux trains (4, 5) de roues motrices respectifs comportant chacun au moins deux roues avant (41, 51) motrices respectivement de part et d'autre d'un pont avant (42, 52) et au moins deux roues arrière (43, 53) motrices respectivement de part et d'autre d'un pont arrière (44, 54), les roues motrices (41, 43) du train avant (4) étant également directices et les ponts (42, 44) du train avant étant espacés de la même distance que ceux (52, 54) du train arrière, véhicule caractérisé en ce que les ponts d'un même train sont identiques et ceux du train avant sont identiques à ceux du train arrière à cette différence près que ceux du train avant comportent des joints homocinétiques, les ponts dans chaque train sont reliés par un arbre de transmission inter-ponts, et, dans chacun des deux trains, les roues du pont avant et celles du pont arrière sont montées mobiles en pivotement autour d'un axe de pivotement (45, 55) respectif transversal fixe par rapport aux longerons et situé sensiblement à égale distance entre les roues avant et les roues arrière du train de roues correspondant et contenu dans un plan transversal au véhicule constituant un plan de symétrie du train considéré pour les deux ponts et la suspension ordonnés de part et d'autre de ce plan, et en ce qu'il comporte un dispositif de direction muni d'un boîtier de direction (70) auquel est solidarisé un levier de direction (71) auquel est articulée une extrémité d'une bielle de commande (72) sensiblement horizontale dont l'extrémité opposée est fixée à un tiroir hydraulique (73) commandant un vérin hydraulique (74) d'assistance dont une partie est en appui contre un point fixe et dont une autre partie est mobile par rapport à la première et solidarisée à un levier relais (76) dont une extrémité est articulée à un point fixe et dont deux autres zones comportent des articulations respectives avec une bielle de commande (78) de timonerie du pont avant (42) et une bielle de commande (78) de timonerie du pont arrière (44) du train avant, le point fixe du levier relais (76) étant dans le plan transversal vertical du véhicule qui est situé à égale distance entre les roues avant (41) et les roues arrière (43) du train de roues avant, les deux bielles de commande (77, 78) de timonerie s'articulant à un levier de fusée (49) respectif solidaire d'une roue du train avant à la verticale de la droite joignant les axes (46) des pivots des roues solidarisées au même pont.

2. Véhicule selon la revendication 1, caractérisé en ce qu'il comporte une boîte de transfert (62) à différentiel entre le train avant (4) et le train arrière (5).

3. Véhicule selon la revendication 2, caractérisé en ce que la boîte de transfert (62) est accouplée à un arbre de transmission (61) du mouvement de la boîte de vitesses, à un arbre de transmission (63) au train avant, et à un arbre de transmission (64) au train arrière.

4. Véhicule selon l'une quelconque des revendications 1 à 3, caractérisé en ce que les projections verticales sur un plan horizontal respectives des prolongements des axes centraux de rotation de chaque roue directrice (41, 43) se coupent en un même point, situé sur la projection verticale sur un plan horizontal du prolongement de l'axe de pivotement (55) du train arrière situé à égale distance des roues avant (51) et arrière (53) de ce train arrière.

5. Véhicule selon l'une quelconque des revendications 1 à 4, caractérisé en ce qu'il est muni pour chaque train de roues d'un système de suspension comportant de chaque côté un empilage (80) de lames de ressorts bridées dans leur région centrale à la partie supérieure d'un dispositif de bridage (82) d'un pivot (83) placé en dessous de l'empilage et dont l'axe longitudinal (45, 55) est horizontal et dans le plan transversal de symétrie du train considéré, ledit axe longitudinal (45, 55) du pivot constituant l'axe de pivotement de ce train (4, 5) situé à égale distance entre les roues avant et les roues arrière dudit train.

6. Véhicule selon l'une quelconque des revendications 1 à 5, caractérisé en ce qu'il est muni pour chaque train de roues d'un système de suspension comportant pour chaque pont du train avant, et de chaque côté, un amortisseur hydraulique télescopique (86), et, pour chaque pont de chaque train et également de chaque côté, une bielle de réaction (87), l'amortisseur hydraulique télescopique étant monté à pivotement et incliné entre un support (89) fixé au châssis et un dispositif de bridage (81) du pont correspondant, et la bielle de réaction étant montée à pivotement entre ledit dispositif de bridage (81) du pont et un dispositif de bridage (82) d'un pivot (83) dont l'axe longitudinal (45, 55) constitue l'axe de pivotement du train considéré situé à égale distance entre les roues avant et les roues arrière dudit train.

7. Véhicule selon l'une quelconque des revendications 1 à 6, caractérisé en ce qu'il est muni, pour chaque train de roues, de deux bielles de réaction (88) disposées sensiblement parallèlement aux longerons (3) et montées à pivotement entre un dispositif de bridage (82) d'un pivot (83) dont l'axe horizontal (45, 55) constitue l'axe de pivotement du train considéré et respectivement un dispositif de bridage du pont avant et un dispositif de bridage du pont arrière.

## Claims

1. A motor vehicle comprising a cab (1) and a trailer (2) not being articulated relative to each other about a vertical axis and carried by two side rails (3) supported at the front and at the rear of the vehicle by two respective sets (4, 5) of driving wheels, each set comprising at least two front driving wheels (41, 51) respectively on either end of a front axle (42, 52) and at least two rear driving wheels (43, 53) respectively on either end of a rear axle (44, 54), the driving wheels (41, 43) of the front set (4) also being steered wheels and the axles (42, 44) of the front set being the same distance apart as those (52, 54) of the rear set, the said vehicle being characterised in that the axles of a same set are identical and those of the front set are identical to those of the rear set except that those of the front set comprise constant-velocity joints, the axles in each set are connected by an inter-axle transmission shaft and, in each of the two sets, the wheels of the front axle and those of the rear axle are movably mounted so as to pivot about a respective transverse pivot axis (45, 55) fixed in relation to the side rails and substantially located at an equal distance between the front wheels and the rear wheels of the corresponding wheel set and in a plane transverse to the vehicle constituting a plane of symmetry of the set in question for the two axles and the suspension arranged on either side of this plane, and in that it comprises a steering mechanism provided with a steering box (70) to which is connected a steering lever (71) on which is articulated one end of a substantially horizontal control rod (72), the opposite end of which is fixed to a hydraulic valve (73) controlling a hydraulic booster cylinder (74), one part of which is supported on a fulcrum and another part of which is movable relative to the first and connected to a relay lever (76), one end of which is articulated on a fulcrum and two other zones of which comprise respective points of articulation with a linkage control rod (78) [sic - 77] of the front axle (42) and a linkage control rod (78) of the rear axle (44) of the front set, the fulcrum of the relay lever (76) being in the transverse vertical vehicle plane which is at an equal distance between the front wheels (41) and the rear wheels (43) of the front wheel set, the two linkage control rods (77, 78) being articulated on a respective stub axle arm (49) integral with a wheel of the front set perpendicularly to the line joining the axes (46) of the pivots of the wheels connected to the same axle.

2. A vehicle according to claim 1, characterised in that it comprises a differential transfer case (62) between the front set (4) and the rear set (5).

3. A vehicle according to claim 2, characterised in that the transfer case (62) is connected to a shaft (61) for transmission of the movement of the gearbox, to a shaft (63) for transmission to the front set and to a shaft (64) for transmission to the rear set.

4. A vehicle according to any one of claims 1 to 3, characterised in that the respective perpendicular projections, in a horizontal plane, of the extensions of the central axes of rotation of each steered wheel (41, 43) intersect at the same point, located on the perpendicular projection, in a horizontal plane, of the extension of the pivot axis (55) of the rear set, the said pivot axis (55) being located at an equal distance from the front (51) and rear (53) wheels of the said rear set.

5. A vehicle according to any one of claims 1 to 4, characterised in that it is provided, for each wheel set, with a suspension system comprising, on each side, a stack (80) of spring leaves clamped in their central region to the upper part of a clamping device (82) of a pivot (83) which is located below the stack and the longitudinal axis (44, 45) of which is horizontal and in the transverse plane of symmetry of the set in question, the said longitudinal axis (44, 45) of the pivot constituting the pivot axis of this set (4, 5), the said pivot axis being located at an equal distance between the front wheels and the rear wheels of the said set.

6. A vehicle according to any one of claims 1 to 5, characterised in that it is provided, for each wheel set, with a suspension system comprising, for each axle of the front set and on each side, a telescopic hydraulic shock absorber (86) and, for each axle of each set and also on each side, a reaction rod (87), the telescopic hydraulic shock absorber being pivotably mounted and inclined between a bracket (89) fixed to the chassis and a clamping device (81) of the corresponding axle, and the reaction rod being pivotably mounted between the said clamping device (81) of the axle and a clamping device (82) of a pivot (83), the longitudinal axis (45, 55) of which constitutes the pivot axis of the set in question, the said pivot axis being located at an equal distance between the front wheels and the rear wheels of the said set.

7. A vehicle according to any one of claims 1 to 6, characterised in that it is provided, for each wheel set, with two reaction rods (88) arranged substantially parallel to the side rails (3) and pivotably mounted between a clamping device (82) of a pivot (83), the horizontal axis (45, 55) of which constitutes the pivot axis of the set in question, a clamping device of the front axle and a clamping device of the rear axle respectively.

## Patentansprüche

1. Kraftwagen, umfassend eine Kabine (1) und eine Plattform (2) ohne gelenkige Verbindung mit vertikaler Achse zwischeneinander, die von zwei Längsträgern (3) getragen werden, die im Vorder- und Hinterteil des Fahrzeuges auf zwei Radsätzen (4, 5) mit Triebrädern ruhen, die jeweils mindestens zwei vordere Triebräder (41, 51), jeweils beiderseits einer Vorderachsbrücke (42, 52), und mindestens zwei hintere Triebräder (43, 53), jeweils beiderseits einer Hinterachsbrücke (44, 54), aufweisen, wobei die Triebräder (41, 43) des vorderen Radsatzes (4) auch Leiträder sind und sich die Brücken (42, 44) des vorderen Radsatzes im selben Abstand voneinander befinden, wie die (52, 54) des hinteren Radsatzes, Kraftwagen, dadurch gekennzeichnet, daß die Brücken jeweils eines Radsatzes gleich sind und diejenigen des vorderen Radsatzes denen des hinteren Radsatzes bis auf den Unterschied gleich sind, daß diejenigen des vorderen Radsatzes Gleichlaufgelenke aufweisen, daß die Brücken jedes Radsatzes durch eine Brückenübertragungswelle miteinander verbunden sind und in jedem der beiden Radsätze die Räder der vorderen Brücke und die der hinteren Brücke kippbar um eine jeweilige Kippachse (45, 55) angebracht sind, die relativ zu den Längsträgern fest ist und sich in im wesentlichen gleichem Abstand zwischen den Vorderrädern und den Hinterrädern des entsprechenden Radsatzes befindet und in einer zum Fahrzeug quer verlaufenden Ebene liegt, die eine Symmetrieebene des betrachteten Radsatzes für die beiden Brücken und die Aufhängung darstellt, die beiderseits dieser Ebene angeordnet sind, und dadurch, daß es über eine Lenkvorrichtung verfügt, die ein Lenkgehäuse (70) aufweist, mit dem ein Lenkstockhebel (71) fest verbunden ist, an dem ein Ende einer im wesentlichen horizontalen Steuerstange (72) angelenkt ist, deren anderes Ende mit einem hydraulischen Schieber (73) verbunden ist, der einen hydraulischen Unterstützungszylinder (74) steuert, dessen einer Teil gegen einen festen Punkt drückt und dessen anderer Teil relativ zum ersten beweglich und mit einem Staffelhebel (76) fest verbunden ist, dessen eines Ende in einem festen Punkt angelenkt ist und von dem zwei andere Bereiche gelenkige Verbindungen jeweils mit einer Lenkgestängesteuerstange (78) der vorderen Brücke (42) und einer Lenkgestängesteuerstange (78) der hinteren Brücke (44) des vorderen Radsatzes tragen, wobei der feste Punkt des Staffelhebels (76) in der vertikalen quer zum Fahrzeug verlaufenden Ebene liegt, die sich im gleichen Abstand von den Vorderrädern (41) und den Hinterrädern (43) des vorderen Radsatzes befindet, wobei die beiden Lenkgestängesteuerstangen (77, 78) jeweils an einen Achsstummelhebel (49) angelenkt sind, der mit einem Rad des vorderen Radsatzes fest verbunden ist, auf der Senkrechten zur Geraden, die die Radbolzen (46) der Räder verbindet, die mit derselben Brücke fest verbunden sind.

2. Kraftwagen nach Patentanspruch 1, dadurch gekennzeichnet, daß er ein Verteilergetriebe (62) mit Differential zwischen dem vorderen Radsatz (4) und dem hinteren Radsatz (5) umfaßt.

3. Kraftwagen nach Patentanspruch 2, dadurch gekennzeichnet, daß das Verteilergetriebe (62) an eine Welle (61) zur Übertragung der Bewegung des Getriebegehäuses, an eine Getriebewelle (63) zum vorderen Radsatz und an eine Getriebewelle (64) zum hinteren Radsatz gekoppelt ist.

4. Kraftwagen nach irgendeinem der Patentansprüche 1 bis 3, dadurch gekennzeichnet, daß sich die vertikalen Projektionen auf eine horizontale Ebene jeweils der Verlängerungen der zentralen Rotationsachsen jedes Triebrades (41, 43) im selben Punkt schneiden, der sich auf der vertikalen Projektion auf eine horizontale Ebene der Verlängerung der Kippachse (55) des hinteren Radsatzes befindet, die denselben Abstand von den Vorderrädern (51) und den Hinterrädern (53) dieses hinteren Radsatzes hat.

5. Kraftwagen nach irgendeinem der Patentansprüche 1 bis 4, dadurch gekennzeichnet, daß er an jedem Radsatz über ein Aufhängungssystem verfügt, das auf jeder Seite einen Stapel (80) von Blattfedern umfaßt, die im mittleren Bereich an den oberen Teil einer Flanschvorrichtung (82) einer Drehachse (83) angeflanscht ist, die unter dem Stapel angeordnet ist und deren Längsachse (45, 55) horizontal und in der transversalen Symmetrieebene des betrachteten Radsatzes verläuft, wobei diese Längsachse (45, 55) der Drehachse die Kippachse dieses Radsatzes (4, 5) darstellt, die sich im selben Abstand von den Vorderrädern und den Hinterrädern dieses Radsatzes befindet.

6. Kraftwagen nach irgendeinem der Patentansprüche 1 bis 5, dadurch gekennzeichnet, daß er an jedem Radsatz über ein Aufhängungssystem verfügt, das an jeder Brücke des vorderen Radsatzes und auf beiden Seiten einen hydraulischen Teleskopstoßdämpfer (85) aufweist und an jeder Brücke jedes Radsatzes und ebenfalls auf beiden Seiten eine Reaktionsstange (87), wobei der hydraulische Teleskopstoßdämpfer kippbar und schräg zwischen einem am Chassis befestigten Halter (89) und einer Flanschvorrichtung (81) der entsprechenden Brücke montiert ist und wobei die Reaktionsstange kippbar zwischen dieser Flanschvorrichtung (81) der Brücke und einer Flanschvorrichtung (82) einer Drehachse (83) montiert ist, deren Längsachse (45, 55) die Kippachse des betrachteten Radsatzes darstellt, die sich im selben Abstand von den Vorderrädern und den Hinterrädern dieses Radsatzes befindet.

7. Kraftwagen nach irgendeinem der Patentansprüche 1 bis 6, dadurch gekennzeichnet, daß er an jedem Radsatz über zwei Reaktionsstangen (88) verfügt, die im wesentlichen parallel zu den Längsträgern (3) angeordnet sind und zwischen der Flanschvorrichtung (82) einer Drehachse (83), deren horizontale Achse (45, 55) die Kippachse des betrachteten Radsatzes darstellt, und einer Flanschvorrichtung der vorderen Brücke bzw. einer Flanschvorrichtung der hinteren Brücke kippbar montiert sind.
